**Europäisches Patentamt**

**European Patent Office**

**Office européen des brevets**

(11) Veröffentlichungsnummer: **0 199 841 B1**

# EUROPÄISCHE PATENTSCHRIFT

(45) Veröffentlichungstag der Patentschrift: **03.04.91**

(51) Int. Cl.⁵: **B27D 1/10**

(21) Anmeldenummer: **85107419.5**

(22) Anmeldetag: **15.06.85**

(54) **Vorrichtung zum Beschichten von Furnieren mit Trägermaterial und mit dieser Vorrichtung durchgeführtes Verfahren.**

(30) Priorität: **25.04.85 DE 8516615 U**

(43) Veröffentlichungstag der Anmeldung:
**05.11.86 Patentblatt 86/45**

(45) Bekanntmachung des Hinweises auf die
Patenterteilung:
**03.04.91 Patentblatt 91/14**

(84) Benannte Vertragsstaaten:
**CH DE FR IT LI**

(56) Entgegenhaltungen:
DE-A- 2 916 828
US-A- 2 772 717

(73) Patentinhaber: **Carl Rückle Maschinenbau GmbH**

**W-7302 Ostfildern-Kemnat(DE)**

(72) Erfinder: **Oelte, Burkhard**
**Am Kühnbach 48**
**W-7170 Schwäb. Hall(DE)**
Erfinder: **Weislogel, Horst**
**Talstrasse 38**
**W-7016 Gerlingen(DE)**

(74) Vertreter: **Schmid, Berthold et al**
**Patentanwälte Dipl.-Ing. B. Schmid Dr. Ing. G. Birn Falbenhennenstrasse 17**
**W-7000 Stuttgart 1(DE)**

## Beschreibung

Die Erfindung bezieht sich auf eine Vorrichtung zum wenigstens teilweisen Beschichten einer aus Furnierblättern bestehenden Furnierbahn mit flächigem, insbesondere bandförmigem Trägermaterial, wobei die Furnierblätter jeweils stumpf aneinanderstoßen. Des weiteren betrifft die Erfindung ein Verfahren zum Beschichten einer aus stumpf aneinanderstoßenden Furnierblättern gebildeten Furnierbahn mittels eines flächigen Trägermaterials.

Es liegt die Aufgabe vor, eine derartige Vorrichtung und ein solches Verfahren zu schaffen, mit der bzw. mit dem es möglich ist, eine maximal der Länge des bandförmigen Trägermaterials entsprechende kaschierte oder beschichtete, aus einzelnen aneinandergefügten Furnierblättern bestehende Furnierbahn automatisch herzustellen.

Die Lösung dieser Aufgabe ergibt sich hinsichtlich der Vorrichtung aus Anspruch 1 und bezüglich des Verfahrens aus Anspruch 19. Die auf die Einzugsvorrichtung aufgegebenen Furnierblätter werden nach dem Anlegen am gesteuert verstellbaren Pendelanschlag nacheinander stumpf zusammengeleimt, wobei jeweils das nächste Furnierblatt an das hintere Ende der bis dahin gebildeten Furnierbahn angeklebt bzw. angeleimt wird. An diese teilweise gebildete Furnierbahn wird fortlaufend, jedoch taktweise und damit abschnittweise, das bandförmige Trägermaterial angeleimt. Die teilweise gebildete beschichtete Furnierbahn wird vor jedem weiteren Anleimen eines Furnierblattes mit Hilfe der Richteinrichtung automatisch gesteuert so ausgerichtet, daß die ablaufende Kante gegenüber einer Richtlinie ausgerichtet wird. Dies erreicht man mit Hilfe einer Richteinrichtung. Die so gebildete beschichtete Furnierbahn kann als ganzes oder unterteilt der weiteren Verarbeitung zugeführt werden.

Das Ausrichten dieses jeweils hinteren Endes der Furnierbahn ist deshalb erforderlich, weil die einzelnen Furnierblätter meist keine einfache geometrische Gestalt aufweisen, das heißt keine Rechtecke sind. Die seitlichen Kanten laufen zwar in der Regel parallel zu einander, jedoch nimmt die in Vorschubrichtung gesehen ablaufende Furnierblattkante gegenüber der vorauseilenden meist eine Schräglage ein. Um diese beispielsweise trapezförmigen Furnierblätter zu einer fortlaufenden Furnierbahn zusammenfügen zu können, legt man jeweils jedes zweite Furnierblatt gestürzt auf die Einzugsvorrichtung. Weil beim Ausrichten jeweils die bis dahin gebildete beschichtete Furnierbahn bei gleichzeitigem Vorschub innerhalb ihrer Ebene gedreht wird, vermeidet man Faltenbildungen am Trägermaterial und somit das Entstehen von Fehlstellen. Der Pendelanschlag ermöglichst nicht nur das parallele Ausrichten der Vorderkante des nächstfolgenden Furnierblatts gegenüber der ausgerichteten hinteren Kante der bis dahin gebildeten Furnierbahn, vielmehr gestattet er aufgrund seiner Pendelbewegung auch das Heranschieben des jeweils nächstfolgenden Furnierblatts an das hintere Furnierbahnende.

Es wird noch darauf hingewiesen, daß selbstverständlich bereits das erste Furnierblatt bzw. dessen rückwärtige Kante gegenüber der Richtlinie ausgerichtet werden muß. Des weiteren muß nicht das ganze zuletzt eingelegte Furnierblatt durch einen einzigen Preßvorgang beschichtet werden.

Weil sich die Richteinrichtung hinter der Preßeinrichtung befindet, behindert sie das Ausrichten des bereits beschichteten Furnierbahnteils und der Vorderkante des nachfolgend anzuleimenden Furnierblatts nicht. Infolgedessen kann man sie optimal installieren und auch den Erfordernissen gemäß ausbilden sowie dimensionieren.

Da jedes Furnierblatt auf der Trägermaterialbahn unverrückbar gehalten ist, müssen die stumpf aneinander anliegenden Kanten benachbarter Furnierblätter nicht notwendigerweise zusammengeleimt werden, jedoch ist ein Zusammenleimen im "Normalfalle" vorgesehen.

Durch die Kippbewegung der Druckwalze der Richteinrichtung kann man wahlweise den in Durchlaufrichtung linken oder rechten Rand gegenüber der Bahnebene an dieser Stelle absenken bzw. stärker absenken als den anderen Rand. Dies führt, wenn man die beschichtete Furnierbahn weiter vorne festhält, zu einem Drehen des hinteren Furnierbahnendes und des Trägermaterials in diesem Bereich und damit zum Ausrichten der ablaufenden Kante der bis dahin gebildeten Furnierbahn gegenüber der Richtlinie bzw. einer Richtebene. Je schräger der Verlauf der ablaufenden Kante gegenüber der genannten Richtlinie ist, umso stärker muß man die Druckwalze absenken. Sobald die ablaufende Kante ihre Sollstellung, also beispielsweise eine deckungsgleiche Stellung mit der oder eine Parallelstellung zur Sollinie einnimmt, kann das nächste Furnier blatt angesetzt bzw. angeleimt werden. Es ist einleuchtend, daß man auf diese Weise auch eine teilweise gebildete unbeschichtete Furnierbahn ausrichten kann.

Der Bereich in dem das Zusammenschieben bzw. das Kaschieren erfolgt, liegt in der Größenordnung von ca. einem halben oder ganzen Millimeter. Mit dem Anfügen des nächsten Furnierblatts an die ablaufende Kante der bis dahin gebildeten Furnierbahn wird dieses Furnierblatt zugleich auf der Trägermaterialbahn fixiert.

Das Zusammenfügen der beiden Kanten, also der eigentliche Anleimvorgang erfolgt in bevorzugter Weise bei stillstehender ablaufender Querkante. Die Taktzeit richtet sich einerseits nach der Vorschubgeschwindigkeit der Furnierbahn und andererseits nach der Breite der Furnierblätter in Vorschubrichtung gemessen.

Die Tänzerwalze, welche zwischen die Vorratsrolle und die Presse geschaltet ist, bewirkt nicht nur eine Schlaufenbildung, vielmehr ermöglicht sie auch eine Vergrößerung und Verkleinerung der Schlaufe in vorgegebenem Rahmen.

Die teilweise gebildete beschichtete Furnierbahn muß, wie erläutert, absatzweise angehalten und weitertransportiert werden. Für das Trägermaterial ist aber ein absatzweises Abwickeln von einer Rolle nicht sehr vorteilhaft, vielmehr wird einem beständigen Drehen der Trägermaterialrolle der Vorzug gegeben. Letzteres ist aufgrund der Schlaufenbildung und der Verwendung einer Tänzerwalze ohne weiteres möglich. Während die teilweise gebildete Furnierbahn stillsteht, wird die Schlaufe vergrößert und beim Weitertransport der beschichteten Furnierbahn wird sie vorzugsweise weitgehend aufgelöst.

Im übrigen erfolgt das Festhalten der bis dahin gebildeten beschichteten Furnierbahn mit Hilfe der Klemmwalze, die mit der hinteren Walze der Richteinrichtung zusammenwirkt.

Die Größe der flächigen Preßglieder der Plattenpresse richtet sich einerseits nach der Länge der Furnierblätter quer zur Vorschubrichtung gesehen und andererseits auch nach deren Breite. Man kann die Breite der Furnierblätter in Vorschubrich- tung gemessen beispielsweise derartig berücksich- tigen, daß jedes Furnierblatt einmal oder auch mehrmals, beispielsweise in zwei oder drei aufeinanderfolgenden Taktstufen, an das Trägermaterial angepreßt wird. Hierbei sind die maximal zu bearbeitenden Furnierblattgrößen für die Auslegung der Preßglieder maßgeblich. Flächige Preßglieder erlauben zwar in der Regel keine so hohe Preßkraft wie beispielsweise ein Preßwalzenpaar, jedoch hat letzteres demgegenüber auch Nachteile. Durch die linienförmige Preßung von Preßwalzen und die damit erzielbare stärkere örtliche Pressung kann das Furnierblatt in Faserlängsrichtung leicht reißen. Diese Gefahr besteht bei flächigen Preßgliedern nicht.

Eine andere Ausbildung der Erfindung ist dadurch gekennzeichnet, daß zwischen der Tänzerwalze und der Vorratsrolle der Trägermaterialzu- führung eine weitere Umlenkwalze angeordnet ist. Ihre Anordnung bestimmt die Lage und Minimalgröße der Schlaufe für die Tänzerwalze.

Eine weitere Variante der Erfindung ergibt sich als Anspruch 5. Die darin erwähnte Einzugsvorrichtung schiebt das aufgelegte Furnierblatt bis zum hochstehenden Pendelanschlag. Nach dem Ausrichten wird letztere in eine wirkunslose Stellung gebracht, so daß das Furnierblatt an die ablaufende Kante der bis dahin gebildeten Furnierbahn herangeschoben werden kann. Die Auszugsvorrichtung übernimmt dann den Weitertransport.

Eine weitere Ausgestaltung der Erfindung ist dadurch gekennzeichnet, daß die Abzugsvorrich- tung für die wenigstens teilweise gebildete beschichtete Furnierbahn eine gegen die Umlenkwalze am Presseneinlaß hin zustellbare antreibbare Abzugswalze aufweist. Bei an dieser Umlenkwalze anliegender Abzugswalze wird auf die bis dahin gebildete beschichtete Furnierbahn im Sinne eines Weitertransports eingewirkt. Aus dem Vorstehenden ergibt sich im übrigen, daß sich die zustellbare Abzugswalze zwischen der Plattenpresse und der Überwachungseinrichtung befindet. Im übrigen muß sie den Weitertransport nicht alleine bewirken. Vielmehr kann sie ihn auch unterstützen, wenn der Transport anderweitig veranlaßt bzw. mitveranlaßt wird. Weil die Abzugsrolle zustell- und damit auch hebbar ist, kann man sie im Bedarfsfalle außer Kraft setzen. Dies ist beispielsweise dann von Vorteil, wenn mit dieser Vorrichtung lediglich eine Furnierbahn erstellt wird und diese nicht beschichtet werden soll. In diesem Falle muß dann auch die Preßeinrichtung in eine wirkungslose Stellung gebracht werden. Die Richteinrichtung und die Überwachungseinrichtung sind jedoch voll nutzbar. Ebenso ggf. vorhandene nachgeschaltete Ein-und Vorrichtungen.

Die antreibbare Vorratsrolle mit dem Trägermaterial ist vorteilhafterweise kontinuierlich antreibbar, was das Abrollen erleichtert.

In weiterer Ausbildung der Erfindung wird vorgeschlagen, daß die quer zu ihrer Längsachse verschiebbare Druckwalze der Richteinrichtung als zweite Tänzerwalze ausgebildet ist. Die Richtbewegung kann mit einer Vorschubbewegung der bis dahin gebildeten beschichteten Furnierbahn kombiniert werden. Durch starkes Auslenken der Tänzerwalze und die damit verbundene Schlaufenbildung kann man die beschichtete Furnierbahn beispielsweise um die Breite eines Furnierblatts weitertransportieren und am Ende dieser Bewegung das not- wendige Ausrichten der ablaufenden Furnierbahn- kante besorgen. Man erspart auf diese Weise eine separaten Antrieb zumindest für das gebildete Furnierbahnteilstück zwischen der vorderen Walze und der Druckwalze.

Gemäß einer weiteren Ausgestaltung der Erfindung ist die Verschiebebewegung der Druckwalze durch eine Abtasteinrichtung für die in Vorschubrichtung gemessene Furnierblattgröße steuerbar. Damit kann in vollautomatischem Betrieb das Druckglied bzw. die Druckwalze jeweils soweit verschoben werden, daß sich das ablaufende Ende der bis dahin erstellten Furnierbahn um die Breite eines Furnierblatts weiterbewegt.

Eine bevorzugte Ausführungsform der Erfindung kennzeichnet sich dadurch, daß die Klemmwalze der hinteren Walze der Richteinrichtung zugeordnet ist und beide gemeinsam zur Durchführung einer gesteuerten Richtbewegung nach links oder rechts kippbar sind. Die Klemmwalze übernimmt hier noch eine zusätzliche Aufgabe, indem sie mit der Druckwalze zusammen eine Richteinrichtung für eine unkaschierte Furnierbahn bildet, die auf dieser Vorrichtung selbstverständlich auch hergestellt werden kann. In diesem Falle muß aber die Klemmwalze die Kippbewegung der Druckwalze zumindest in dem Maße mitmachen können, daß die Furnierbahn zwischen den beiden Walzen während des Richtvorgangs eingeklemmt bleibt.

Eine weitere Variante der Erfindung ist durch einen zustellbaren Blattanschlag zwischen der Abzugswalze und dem Einlaß der Plattenpresse gekennzeichnet. Dieser Blattanschlag ermöglicht das Ausrichten des ersten Furnierblatts gegenüber dem Trägermaterial. Dabei wird die Vorderkante des ersten Furnierblatts auch gegenüber der Richtebene oder Richtlinie ausgerichtet. Nach dem Weitertransport wird anschließend die ablaufende Kante des ersten Furnierblatts gegenüber der Richtlinie ausgerichtet und daraufhin erfolgt lediglich noch ein Ausrichten der jeweils ablaufenden Kante der bis dahin gebildeten Furnierbahn.

Eine Weiterbildung der Erfindung sieht vor, daß die vordere Walze am Pressenauslaß und die Druckwalze der Richteinrichtung als Kühlwalze ausgebildet sind. Mit Hilfe dieser Kühlwalzen kann man die zuvor in der Presse erwärmte beschichtete Furnierbahn rasch abkühlen, was im Hinblick auf das Abbinden des Leims oder dergleichen erstrebenswert ist. Es findet in Durchlaufrichtung gesehen ein immer stärkeres Abkühlen der beschichteten Furnierbahn statt.

Eine weitere Ausgestaltung der Erfindung besteht darin, daß die hintere Walze der Richteinrichtung zugleich ein Element einer Schneidvorrichtung für die beschichtete Furnierbahn bildet, wobei das andere Element als zustellbares Messer ausgebildet ist. Mit Hilfe dieser Schneidvorrichtung kann man von der teilweise beschichteten Furnierbahn insbesondere gleiche Teile abschneiden und der weiteren Verarbeitung zuführen. Zweckmäßigerweise erfolgt das Abschneiden während des Richtens, also bei Stillstand der hinteren Walze. Geschnitten wird jeweils nach Bildung der entsprechenden Teillänge. Dabei hat der Schneidvorgang Priorität. Er stoppt den Transport der Furnierbahn.

Eine andere Variante der Erfindung ist dadurch gekennzeichnet, daß die hintere Walze aus hartem Material, insbesondere Metall, hergestellt und an ihrem Umfang mit Vulkulan od. dgl. weichelastischem bzw. gummiartigem Material beschichtet ist. Während des Abscherens tritt das zustellbare Messer oder dgl. etwas in das Vulkulan oder dergleichen ein. Dieses Material ist jedoch verhältnismäßig widerstansfähig, so daß man mit einer langen Standzeit dieser Walze rechnen kann, insbesondere auch wegen der großen Umfangsfläche der Walze.

Eine weitere Ausbildung der Erfindung kennzeichnet sich durch eine der Schneidvorrichtung nachgeschaltete Transporteinrichtung für die abgeschnittenen Teilstücke der beschichteten Furnierbahn. Hier kann es sich beispielsweise um eine Förderbahn oder dgl. handeln. Eine in dieser Hinsicht zweckmäßige Weiterbildung der Erfindung ist durch eine der Transporteinrichtung nachgeschaltete Stapeleinrichtung für die zugeführten Teilstücke der beschichteten Furnierbahn gekennzeichnet. Sobald der Stapel die vorgesehene Höhe erreicht hat, wird er abgenommen und danach beginnt die Bildung eines weiteren Stapels. Evtl. nimmt man den Stapel nicht bei Erreichen einer vorgegebenen Höhe, sondern nach dem Aufteilen der gesamten Furnierbahn ab, falls diese vor Erreichen der maximalen Stapelhöhe bereits vollständig in Teilstücke zerlegt ist.

In weiterer Ausgestaltung der Erfindung wird vorgeschlagen, daß der Richteinrichtung eine Aufwickelvorrichtung für die beschich tete Furnierbahn nachgeschaltet ist. Damit besteht die Möglichkeit, die beschichtete Furnierbahn entweder in der vorstehend geschilderten Weise in Teilstücke zu zerschneiden oder aber aufzuwickeln und dem Verbraucher als Rolle zur Verfügung zu stellen.

Eine sehr vorteilhafte Variante der Erfindung besteht darin, daß das Trägermaterial aus wenigstens zwei parallelen Trägerbahnen besteht, deren Abmessung - quer zur Vorschubrichtung gemessen - zusammen geringer ist als die Breite der Furnierbahn. In diesem Falle ist die Furnierbahn nicht auf ihrer gesamten Breite beschichtet, sondern nur über Teilbereiche, insbesondere über äußere Randbereiche. Es ist leicht einzusehen, daß man anstelle von zwei außenliegenden Trägerbahnen auch mehrere, insbesondere gleichmäßig über die Breite verteilte, Trägerbahnen vorsehen kann. Welcher Trägerart man den Vorzug gibt, hängt von den Erfordernissen der weiteren Verarbeitung der beschichteten Furnierbahn ab. Umgekehrt beinhaltet diese Ausbildung auch das parallele Aufbringen zweier Furnierbahnen auf einer Trägerbahn, jedoch ist dies sinnvollerweise nur dann vertretbar, wenn die Furnierblätter eine genau vorgegebene geometrische Gestalt haben, sie insbesondere rechteckig sind, so daß das Ausrichten nicht notwendig wird oder mit dem Ausrichten der einen Furnierbahn zugleich auch das ablaufende Ende der anderen Furnierbahn korrekt ausgerichtet ist.

Zur Lösung der gestellten Aufgabe wird des weiteren ein Verfahren zum Beschichten einer aus stumpf aneinanderstoßenden Furnierblättern gebildeten Furnierbahn mittels eines flächigen Trägermaterials vorgeschlagen, dessen Verfahrensschritte sich aus Anspruch 19 ergeben. Dieses Verfahren ermöglicht die Beschichtung einer Furnierbahn ohne Faltenbildung mit automatischem Arbeitsablauf. Die einzelnen Furnierblätter werden allerdings vorzugsweise von Hand eingelegt, wobei man sie wie bereits erwähnt, gestürzt einlegen kann. Dies ergibt auch ein besonders schönes Furnierbild, weil sich immer wieder spiegelbildliche Darstellungen der Maserungen ergeben.

Der Druck der Preßeinrichtung kann beispielsweise 50 bis 200 N/cm² betragen. Bei Anwendung einer Temperatur von ca. 100° C erreicht man ein Glätten im Sinne eines Bügelvorgangs. Durch entsprechende Auslegung der Länge der Preß- und Heizstrecke kann man den Schwierigkeiten beim Trocknungsvorgang denen eine gewachsene Holzstruktur durch Schrumpfen ausgesetzt ist, wirkungsvoll begegnen. Die Zeitdauer eines einzelnen Preßvorgangs sollte zweckmäßigerweise der zeitlichen Dauer des Ansetzvorgangs eines Furnierblatts entsprechen, die ca. 1 Sek. beträgt, das bedeutet, daß dem Zusammensetzvorgang in einer "online"-Herstellung der beschichteten Furnierbahn die Priorität zukommt.

Im übrigen kann man, wie bereits erwähnt, durch entsprechende Wahl der Preßlänge die angeleimten Furnierblätter mehreren Preß- bzw. Bügelvorgängen aussetzen. Deshalb ist es auch vorteilhaft, wenn man reversiblen Leim verwendet. Ein solcher Spezialkleber z.B. Polyurethan, Schmelzklebstoff und dgl. härtet erst nachfolgend, beispielsweise innerhalb von 24 Stunden, durch Feuchtigkeitsaufnahme aus dem verbundenen Material aus. Auf diese Weise kann man auch durch mehrmaliges Pressen Spannungen aus einer unkaschierten Furnierbahn herausarbeiten.

Die Erfindung wird nachstehend anhand der Zeichnung näher erläutert. Die Zeichnung zeigt zwei Ausführungsbeispiele der Erfindung in einer schematischen Seitenansicht.

Die Furnierblätter werden einzeln nacheinander auf einen antreibbaren Einzugsriemen 2 od. dgl. einer Einzugsvorrichtung 1 aufgelegt. Er transportiert sie im Zusammenwirken mit einer einschwenkbaren Einzugsrolle 3 im Sinne des Pfeils 4 in eine Furnierverleimstation 5. Ein mit Hilfe einer Zustellvorrichtung 6 in die Bewegungsebene der Furnierblätter einfahrbarer Pendelanschlag 7 dient zum Ausrichten der in Vorschubrichtung 4 vorderen Furnierblattkante des jeweils nächstfolgenden Furnierblatts gegenüber der hinteren Kante des zuletzt eingelegten. Zugleich sorgt er auch für den vorgesehenen Abstand zur ablaufenden Kante des zuvor eingelegten Furnierblatts bzw. der teilweise bereits gebildeten Furnierbahn. Nach dem Ausrichten der einander zugeordneten Kanten benachbarter Furnierblätter wird das zuletzt eingelegte gegen die ablaufende Querkante des zuvor eingelegten Furnierblatts bewegt und daran angepreßt. Zuvor wurde wenigstens eine dieser beiden Kanten beleimt. In der Furnierverleimstation 5 erfolgt nicht nur dieses Zusammenfügen der beiden Kanten, vielmehr wird dort auch der notwendige Fügedruck aufgegeben und außerdem ist diese Station vorteilhafterweise beheizbar.

Die ablaufende Kante des zuletzt eingelegten und angeleimten Furnierblatts wird mit Hilfe einer Abtasteinrichtung 8 abgetastet. Vorzugsweise in diesem Bereich befindet sich auch eine Richtebene oder Richtlinie 9, gegenüber der die ablaufende Kante ausgerichtet werden muß, damit mit Hilfe des Pendelanschlags das nächste Furnierblatt auf den richtigen Spaltabstand gebracht werden kann. Wenn die ablaufende Furnierkante der teilweise gebildeten Furnierbahn bereits korrekt verläuft, ist ein Ausrichtvorgang nicht erforderlich. Im anderen Falle muß die bis dahin erstellte Furnierbahn mit Hilfe der Richteinrichtung 10 ausgerichtet werden. Dabei wird die teilweise gebildete und in der nachstehend geschilderten Weise mit einem Trägermaterial 11 zum Teil kaschierte Furnierbahn innerhalb ihrer Ebene so gedreht, daß keine der Ecken der Furnierbahn 27 gegenüber der anderen voraus- oder nacheilt. Demnach wird der Vorschub der kaschierten Furnierbahn in dem Moment gestoppt, in dem eine der hinteren Furnierbahnecken die Richtebene 9 erreicht hat. Daraufhin wirkt die Richteinrichtung 10 in dem Sinne auf die kaschierte Furnierbahn ein, daß sich die nacheilende Ecke gegen die Richtebene hin bewegt und diese schließlich erreicht. Ein derartiges Richten ist auch beim - vorzugsweise verlangsamten- Weiterlaufen der Furnierbahn 27 möglich.

Die Furnierbahn wird an ihrer Unterseite min Hilfe eines Trägermaterials 11, beispielsweise eines Vlieses, eines Gewebes oder eines anderen flächigen Materials beschichtet. Das Trägermaterial 11 wird von einer Vorratsrolle 12 abgespult. Es läuft beim Ausführungsbeispiel über zwei Umlenkwalzen 13 und 14. Dazwischen befindet sich noch eine Tänzerwalze 15, deren tiefste Stellung mit einer festen Linie und deren höchste Stellung mit einer gestrichelten Linie angedeutet sind. Sie dient zur Bildung einer Schlaufe 16 aus dem Trägermaterial 11. Während des Richtens der ablaufenden Kante und während des Preßvorgangs zum Anpressen des Trägermaterials an die teilweise gebildete Furnierbahn wird die Schlaufe 16 zunehmend vergrößert. Das hochlaufende Trum der Schlaufe 16 verläuft bei den Ausführsungsbeispielen etwa rechtwinklig zur Vorschubebene des Furnierbahn 27. Zur Schlaufenbildung kommt es dadurch, daß das Trägermaterial 11 fortlaufend von der Vorratsrolle 12 abgespult wird, während die Vorschubbewegung der Furnierbahn in bevorzugter Weise taktweise erfolgt. Dies ist beim Ausführungsbeispiel sogar erforderlich und zwar deshalb, weil es sich bei der Preßeinrichtung um eine Plattenpresse 17 mit einem unteren Preßbacken oder Preßglied 18 und einem oberen Preßbacken oder Preßglied 19 handelt. Beide sind in bevorzugter Weise beheizbar. Dadurch läßt sich der beispielsweise bereits auf dem Trägermaterial 11 befindliche Klebstoff bzw. Leim thermisch erweichen und somit aktivieren. Durch das Zusammenpressen von Trägermaterial und Furnierbahn, insbesondere in Verbindung mit der Beheizung, erfolgt sowohl das Zusammenleimen als auch ein Glätten der nahezu unvermeidlich welligen Furnierblätter. Die Breite der Preßglieder 18 und 19 kann in Vorschubrichtung 4 gesehen die Breite eines Furnierblatts übertreffen, beispielsweise zwei- oder dreimal so breit sein. Dadurch wird jedes Furnierblatt zwei- oder dreimal hintereinander einem Preßvorgang ausgesetzt. Bei Verwendung eines reversiblen, d.h. bei Wärme sich wieder erweichenden Leims, kann mit jedem Preßvorgang das betreffende Furnierblatt immer mehr geglättet werden, so daß es beim Verlassen der Preßeinrichtung schließlich völlig glatt ist. Hernach härtet dann dieser Leim irreversibel aus.

Die Umlenkwalze 14 ist zugleich eine Führungswalze am Presseneinlaß. Zusammen mit einer weiteren Führungswalze am Pressenauslaß sorgt sie für eine richtige Zuordnung der teilweise gebildeten Furnierbahn und des Trägermaterials gegenüber den Preßgliedern 18 und 19 der Preßeinrichtung 17.

Auch die dem Pressenauslaß zugeordnete vordere Walze 20 hat noch eine weitere Funktion. Sie bildet auch eine erste Umlenkwalze der Richteinrichtung 10. Die hintere Walze ist mit 21 bezeichnet. Dazwischen befindet sich das vorzugsweise als Druckwalze 22 ausgebildete Druckglied der Richteinrichtung 10. Letztere ist gemäß dem Doppelpfeil 23 heb- und senkbar. Außerdem deuten Pfeile die Drehrichtungen der drei Walzen 20, 21 und 22 an.

Die Druckwalze 22 des Richteinrichtung 10 wird beim Richten nicht parallel zu sich gegen die beschichtete Furnierbahn 24 gedrückt, vielmehr wird entweder ihr rechtes oder ihr linkes Ende abgesenkt bzw. stärker abgesenkt als das andere. Dadurch erreicht man in der angestrebten Weise das Drehen der bis dahin gebildeten Furnierbahn in der für das korrekte Ausrichten der hinteren Furnierbahnkante gegenüber der Richtlinie 9 notwendigen Weise. Zweckmäßigerweise sorgt eine entsprechende Steuerung dafür, daß das jeweils richtige Druckwalzenende abgesenkt bzw. stärker abgesenkt wird. Zugleich kann man über diese Steuerung, die mit der Abtasteinrichtung 8 verbunden ist, die Größe der Verstellbewegung der Druckwalze 22 sowie ihre spätere Rückstellung in die Ausgangslage bewirken.

Während des Richtvorgangs muß die beschichtete Furnierbahn 24 an einer Stelle festgehalten werden, welche die Druckwalze 22 bereits passiert hat. Dies erreicht man mit Hilfe einer Klemmwalze 25, die mit der hinteren Walze 21 zusammen eine derartige Festhaltevorrichtung bildet. Diese Klemmwalze ist im Sinne des Doppelpfeils 26 senk- und hebbar. Auch ihre Bewegung erfolgt vorzugsweise automatisch gesteuert und in Abstimmung mit dem Takt der Furnier-Verleimstation 5 sowie der Preßeinrichtung 17. Es bleibt noch nachzutragen, daß die in der Furnier-Verleimstation 5 gebildete unbeschichtete Furnierbahn 27 die Verleimstation 5 mittels einer Auszugsvorrichtung 28 verläßt und der zweiten Umlenkwalze 14 gegenüberliegend eine zustellbare Abzugswalze 29 einer Abzugsvorrichtung 30 angeordnet ist.

Zumindest die vordere Walze 20 am Pressenauslaß und die Druckwalze 22 der Richteinrichtung 10 sind als Kühlwalzen ausgebildet, um die zuvor in der Presse 17 erwärmte kaschierte Furnierbahn 24 möglichst rasch abzukühlen.

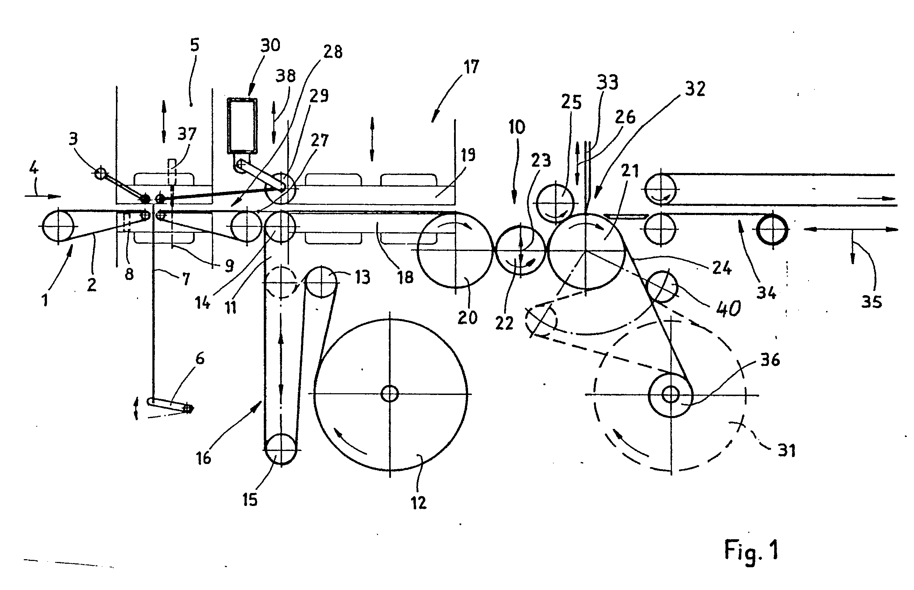

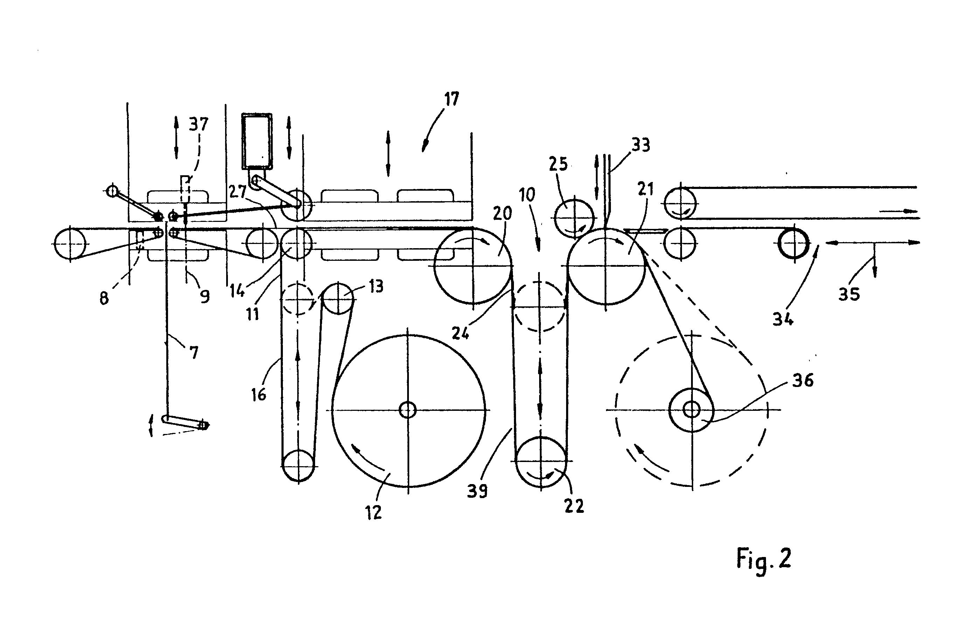

Die auf das Trägermaterial 11 aufgebrachte Furnierbahn 27 kann man entweder zu einer Rolle 31 aufwickeln, oder aber in insbesondere gleiche Teilstücke unterteilen. Im ersteren Falle wird sie an einer Hilfswalze 40 vorbeigeführt, die gemäß Fig. 1 um die geometrische Achse der hinteren Walze 21 verschwenkbar ist und dadurch Spannungsschwankungen verhindert. Falls Teilstücke gebildet werden sollen, kommt eine Schneidvorrichtung 32 zur Anwendung, die durch die hintere Walze 21 der Richteinrichtung 10 und ein im Sinne des Doppelpfeils 26 zu- und rückstellbares Messer 33 gebildet ist. In diesem Falle besteht die hintere Walze 21 aus hartem Material, insbesondere Metall, und sie ist an ihrem Umfang mit Vulkulan od. dgl. weichelastischem bzw. gummiartigem Material beschichtet.

Der Schneidvorrichtung 32 ist eine Transporteinrichtung 34 für die Teilstücke zugeordnet. Sie kann zu einer Abstapelvorrichtung führen oder ergänzt werden, was durch den Dreifachpfeil 35 angedeutet ist. Die Aufwickelvorrichtung ist mit 36 bezeichnet.

Die Druckwalze 22 kann als zweite Tänzerwalze ausgebildet sein. Das heißt, man kann auch sie zur Bildung einer Schlaufe 39 aus beschichteter Furnierbahn 24 heranziehen. Hierbei geht es jedoch nicht lediglich um die Bildung einer Schlaufe und die damit verbundenen bekannten Vorteile, sondern um eine gesteuerte, absatzweise Schlaufenbildung. Wenn die beschichtete Furnierbahn 24 mit Hilfe der hinteren Walze 21 und der Klemmwalze 25 festgehalten wird, so bewirkt die Bildung einer Schlaufe durch die Druckwalze 22 ein Hindurchziehen des im Pressenbereich befindlichen beschichteten Furnierbahnteilstücks und ein Auflösen oder zumindest teilweises Auflösen der Schlaufe 16 sowie die Zusammenführung dieses Schlaufenteilstücks mit einem weiteren Teil der Furnierbahn 27 einschließlich des Transports in den Pressenbereich. Anders ausgedrückt, man erspart sich auf diese Weise einen separaten Vorschub an anderer Stelle oder unterstützt zumindest eine diesbezügliche Vorschubvorrichtung. Außerdem wird dieser Absenkbewegung der Druckwalze 22 auch die notwendige Kippbewegung zum Ausrichten der hinteren Furnierbahnkante überlagert oder nachgeschaltet. Diese Bewegungen werden im übrigen auch durch die Abtasteinrichtung 8 für die Furnierblattabmessung -in Vorschubrichtung gemessen- gesteuert.

Die Klemmwalze 25 arbeitet gemäß der vorstehenden Beschreibung mit der hinteren Walze 21 zusammen. Statt dessen kann sie, gemäß einer weiteren Ausgestaltung der Erfindung, auch zusätzlich oder alternativ mit der Druckwalze 22 zusammenwirken, d.h. dieser zugeordnet sein, und mit ihr zusammen nach links oder rechts gekippt werden. Dies ist allerdings nur dann sinnvoll, wenn die Furnierbahn 27, die in diesem Falle nicht auf ein Trägermaterial 11 aufgeleimt wurde, über die Walzen 20, 22 und 21 geführt wird und somit während des Richtvorgangs durch die Walzen 22 und 25 klemmend gehalten werden kann. Dadurch ist die Maschine außerordentlich universell verwendbar und auch in herkömmlicher Weise zur Fertigung unkaschierter Furnierbahnen geeignet. Dabei bleiben die nachgeschalteten Einrichtungen nach wie vor funktionsfähig.

Ein Blattanschlag zum Anlegen der vorderen Kante des ersten Furnierblatts, der im Sinne des Doppelpfeils 38 heb- und senkbar ist, trägt die Bezugszahl 37.

## Ansprüche

1. Vorrichtung zum wenigstens teilweisen Beschichten einer aus Furnierblättern bestehenden Furnierbahn mit flächigem, insbesondere bandförmigem, Trägematerial (11), wobei die Furnierblätter jeweils stumpf aneinanderstoßen, die folgende Merkmale aufweist:

   a) eine Einzugsvorrichtung (1) für die Furnierblätter und eine Auszugsvorrichtung (28) für die wenigstens teilweise gebildete Furnierbahn,

   b) ein Pendelanschlag (7) zum Anlegen der vorderen Furnierblattkante,

   c) eine Abzugsvorrichtung (30) für die zumindest teilweise gebildete beschichtete Furnierbahn,

   d) eine Plattenpresse (17) zum Anpassen des Trägermaterials (11) an die zumindest teilweise gebildete Furnierbahn,

   e) eine in Vorschubrichtung zwischen dem Pendelanschlag (7) und dem Einlaß der Presse (17) gelegene, sich quer zur Vorschubrichtung (4) erstreckende Richtlinie (9) und zwei darüber befindliche beabstandete Sensoren für die hintere Kante der wenigstens teilweise gebildeten Furnierbahn zur Steuerung einer Richteinrichtung (10) für letztere,

   f) die in Durchlaufrichtung hinter der Presse (17) angeordnete, aus drei hintereinander gelegenen, sich über die Breite der wenigstens teilweise gebildeten beschichteten Furnierbahn erstreckenden Walzen (20, 21, 22) bestehende Richteinrichtung (10) für die wenigstens teilweise gebildete und beschichtete Furnierbahn, deren mittlere Walze als über eine Zustelleinrichtung zustellbare Druckwalze (22) mit gegenüber der Pressfläche der Plattenpresse (17) im Winkel verstellbarer Achse ausgebildet ist und einer mit der in Durchlaufrichtung hinteren Walze (21) zusammenwirkende, über eine weitere Zustelleinrichtung zustellbare Klemmwalze (25), wobei zum Ausrichten einer gegenüber der Richtlinie zurückgebliebenen hinteren Ecke der beschichteten Furnierbahn ein ihr zugeordnetes Ende der Druckwalze (22) zugestellt wird,

   g) eine Umlenkwalze (14) vor der Plattenpresse (17) für das bandförmige von einer Vorratsrolle (12) entnehmbare Trägermaterial (11) und die aufliegende, teilweise gebildete Furnierbahn, wobei sich zwischen der Vorratsrolle (12) und der Umlenkwalze (14) eine schlaufenbildende Tänzerwalze (15) befindet,

   h) eine Furnierverleimstation (5) zum Anleimen des jeweils nächsten ausgerichteten Furnierblatts an das jeweils ausgerichtete Furnierbahnende,

   i) eine Plattenpressenbeheizung,

   k) eine taktweise Steuerung der Plattenpresse (17), des Pendelanschlags (7), der Verleimstation (5), der Auszugsvorrichtung (28), der Abzugsvorrichtung (30), des Druckwalze (22) und der Klemmwalze (25),

   l) eine Regeleinrichtung mit Energieversorgung wenigstens für die taktweise verstellbaren Einrichtungen.

2. Vorrichtung nach Anspruch 1, dadurch gekennzeichnet, daß die in Durchlaufrichtung vordere Walze (20) der Richteinrichtung (10) dem Pressenauslaß zugeordnet, sowie als Führungs und Umlenkwalze ausgebildet ist.

3. Vorrichtung nach Anspruch 1 oder 2, dadurch gekennzeichnet, daß zur Bildung der Plattenpressenbeheizung zumindest eines der Preßglieder (18, 19) der Plattenpresse (17) beheizbar ist.

4. Vorrichtung nach wenigstens einem der vorhergehenden Ansprüche, dadurch gekennzeichnet, daß zwischen der Tänzerwalze (15) und der Vorratsrolle (12) der Trägermaterialzuführung eine weitere Umlenkwalze (13) angeordnet ist.

5. Vorrichtung nach wenigstens einem der vorhergehenden Ansprüche, dadurch gekennzeichnet, daß die Einzugsvorrichtung (1) sowie die Auszugsvorrichtung (28) für die zumindest teilweise gebildete Furnierbahn jeweils endlose Förderglieder aufweisen, deren arbeitende Trume in Verlängerung voneinander stehen, wobei sich der Pendelanschlag (7) dazwischen befindet.

6. Vorrichtung nach Anspruch 5, dadurch gekennzeichnet, daß die Abzugsvorrichtung (30) für die wenigstens teilweise gebildete beschichtete Furnierbahn eine gegen die Umlenkwalze (14) am Presseneinlaß hin zustellbare, antreibbare Abzugswalze (29) aufweist.

7. Vorrichtung nach wenigstens einem der vorhergehenden Ansprüche, dadurch gekennzeichnet, daß die Vorratsrolle (12) mit dem Trägermaterial (11) kontinuierlich antreibbar ist.

8. Vorrichtung nach wenigstens einem der vorhergehenden Ansprüche, dadurch gekennzeichnet, daß die quer zu ihrer Längsachse verschiebbare Druckwalze (22) der Richteinrichtung (10) als zweite Tänzerwalze ausgebildet ist.

9. Vorrichtung nach Anspruch 8, dadurch gekennzeichnet, daß die Verschiebebewegung (23) der Druckwalze (22) durch die Abtasteinrichtung für die in Vorschubrichtung gemessene Furnierblattgröße steuerbar ist.

10. Vorrichtung nach wenigstens einem der vorhergehenden Ansprüche, dadurch gekennzeichnet, daß die Klemmwalze (25) der hinteren Walze (21) der Richteinrichtung (10) zugeordnet ist und beide gemeinsam zur Durchführung einer gesteuerten Richtbewegung nach links oder rechts kippbar sind.

11. Vorrichtung nach wenigstens einem der vorhergehenden Ansprüche, gekennzeichnet durch einen zustellbaren Blattanschlag (37) zwischen der Abzugswalze (29) und dem Einlaß der Plattenpresse (17).

12. Vorrichtung nach wenigstens einem der vorhergehenden Ansprüche, dadurch gekennzeichnet, daß die vordere Walze (20) am Pressenauslaß und die Druckwalze (22) der Richteinrichtung (10) als Kühlwalzen ausgebildet sind.

13. Vorrichtung nach wenigstens einem der vorgehenden Ansprüche, dadurch gekennzeichnet, daß die hintere Walze (21) der Richteinrichtung zugleich ein Element einer Schneidvorrichtung (32) für die beschichtete Furnierbahn (24) bildet, wobei ein zweites Element als zustellbares Messer (33) ausgebildet ist.

14. Vorrichtung nach Anspruch 13, dadurch gekennzeichnet, daß die hintere Walze (21) aus hartem Material, insbesondere Metall, hergestellt und an ihrem Umfang mit Vulkulan od. dgl. weichelastischem bzw. gummiartigem Material beschichtet ist.

15. Vorrichtung nach Anspruch 13 oder 14, gekennzeichnet durch eine der Schneidvorrichtung (32) nachgeschaltete Transporteinrichtung (34) für die abgeschnitteten Teilstücke des beschichteten Furnierbahn.

16. Vorrichtung nach Anspruch 15, gekennzeichnet durch eine der Transporteinrichtung (34) nachgeschaltete Stapeleinrichtung (35) für die zugeführten Teilstücke der beschichteten Furnierbahn.

17. Vorrichtung nach wenigstens einem der vorhergehenden Ansprüche, gekennzeichnet durch eine der Richteinrichtung (10) nachgeschaltete Aufwickelvorrichtung (36) für die beschichtete Furnierbahn.

18. Vorrichtung nach wenigstens einem der vorhergehenden Ansprüche, dadurch gekennzeichnet, daß das Trägermaterial (11) aus wenigstens zwei parallelen Trägerbahnen besteht, deren Abmessung - quer zur Vorschubrichtung gemessen - zusammen geringer ist als die Breite der Furnierbahn.

19. Verfahren zum Beschichten einer aus stumpf aneinanderstoßenden Furnierblättern gebildeten Furnierbahn mittels eines flächigen Trägermaterials (11), das folgende Verfahrensschritte aufweist:

    a) die Furnierblätter werden einzeln taktweise automatisch eingezogen und mit ihrer Vorderkante an einem Pendelanschlag (7) ausgerichtet,

b) das hintere Ende des ersten Furnierblatts bzw. der teilweise gebildeten Furnierbahn wird richtlichtgesteuert gegenüber dem Pendelanschlag ausgerichtet, wobei die teilweise gebildete Furnierbahn zum Ausrichten ihrer rückwärtigen Querkante an ihrem Längsbereich mit der nacheilenden hinteren Ecke quer zur Vorschubrichtung (4) seitlich ausgelenkt oder stärker ausgelenkt wird als der Längsbereich mit der voreilenden hinteren Ecke, und wobei außerdem ein in Vorschubrichtung hinter der Auslenkstelle gelegenes Teilstück festgehalten wird,

c) das jeweils nächste Furnierblatt wird an das hintere Ende der teilweise gebildeten Furnierbahn angeleimt,

d) das Trägermaterial wird mit dar darüber befindlichen, teilweise gebildeten Furnierbahn in eine Presse transportiert, und beide werden darin zusammengeleimt, wobei die teilweise gebildete beschichtete Furnierbahn (24) taktweise um jeweils eine Furnierblattbreite - in Vorschubrichtung gemessen - weiterbewegt und dann das ablaufende Furnierbahnende gegenüber der Richtlinie (9) wieder ausgerichtet wird.

**Claims**

1. Device for at least partly coating a veneer path consisting of veneer sheets with laminar, in particular strip-like carrier material (11), wherein the veneer sheets in each case butt-join one another, which device comprises the following features:

    a) a drawing-in device (1) for the veneer sheets and a drawing-out device (28) for the veneer path which is at least partly formed;

    b) an oscillating stop (7) for adjusting the front edge of the veneer sheet;

    c) a take-up device (30) for the at least partly formed coated veneer path;

    d) a sheet press (17) for adapting the carrier material (11) to the at least partially formed veneer path;

    e) a guide line (9) which lies in the feed direction between the oscillating stop (7) and the inlet of the press (17) and extends transversely to the feed direction (4), and two sensors which are spaced from one another thereabove for the rear edge of the at least partly formed veneer path for controlling a guiding device (10) for the latter;

    f) the guiding device (10) for the at least partly formed and coated veneer path, which device is disposed in the run-through direction behind the press (17), consists of three rollers (20, 21, 22) which are arranged one after the other and which extend over the width of the at least partly formed coated veneer path, and of which the middle roller is formed as a pressure roller (22) which can be delivered via a delivery device and has an axis of which the angle is adjustable with respect to the pressing surface of the plate press (17), and a clamping roller (25) which cooperates with the rear roller (21) in the run-through direction and can be delivered via a further delivery device, wherein an end of the pressure roller (22) associated with the coated veneer path is delivered in order to align a rear corner of the coated veneer path which trails with respect to the guiding line;

    g) a deflecting roller (14) in front of the plate press (17) for the strip-like carrier material (11) which can be removed from a supply roll (12) and the supported partly formed veneer path, wherein there is provided between the supply roll (12) and the deflecting roller (14) a compensating roller (15) which forms loops;

    h) a veneer glueing station (5) for glueing the next veneer sheet aligned in each case to the veneer path end aligned in each case;

    i) a plate press heating device;

    k) a timed control of the plate press (17), of the oscillating stop (7), of the glueing station (5), of the drawing-out device (28), of the take-up device (30), of the pressure roller (22) and of the clamping roller (25);

    l) a regulating device having an energy supply at least for the devices which are adjusted in a timed manner.

2. Device according to claim 1, characterized in that the front roller (20) in the run-through direction of the guiding device (10) is assigned to the press outlet and is formed as a guiding and deflecting roller.

3. Device according to claim 1 or 2, characterized in that for forming a plate press heating device at least one of the pressing members (18, 19) of the plate press (17) can be heated.

4. Device according to at least one of the preceding claims, characterized in that a further deflecting roller (13) is disposed between the compensating roller (15) and the supply roll (12) of the carrier material supply.

5. Device according to at least one of the preceding claims, characterized in that the drawing-in device (1) as well as the drawing-out device (28) comprise for the veneer path which is at least partly formed in each case endless conveyor members of which the operating runs are in an extension of each other, wherein the oscillating stop (7) is thereinbetween.

6. Device according to claim 5, characterized in that the take-up device (30) for the at least partly formed coated veneer path comprises a take-up roller (29) which can be driven and can be adjusted towards the deflecting roller (14) at the press inlet.

7. Device according to at least one of the preceding claims, characterized in that the supply roll (12) can be continuously driven with the carrier material (11).

8. Device according to at least one of the preceding claims, characterized in that the pressure roller (22), of the guiding device (10), which can be displaced transversely to the longitudinal axis thereof, is formed as a second compensating roller.

9. Device according to claim 8, characterized in that the displacement movement (23) of the pressure roller (22) can be controlled by the scanning device for the size of the veneer sheet measured in the feed direction.

10. Device according to at least one of the preceding claims, characterized in that the clamping roller (25) is associated with the rear roller (21) of the guiding device (10) and both together can be tilted to the lefthand or righthand side to perform a controlled adjusting movement.

11. Device according to at least one of the preceding claims, characterized by a sheet stop (37) which can be delivered between the take-up roller (29) and the inlet of the plate press (17).

12. Device according to at least one of the preceding claims, characterized in that the front roller (20) at the press outlet and the pressure roller (22) of the guiding device (10) are formed as cooling rollers.

13. Device according to at least one of the preceding claims, characterized in that the rear roller (21) of the adjusting device simultaneously forms an element of a cutting device (32) for the coated veneer path (24), wherein a second element is formed as blade (33) which can be delivered.

14. Device according to claim 13, characterized in that the rear roller (21) is made of a solid material, in particular of metal, and at its periphery it is coated with Vulculan or similar flexible or rubberlike material.

15. Device according to claim 13 or 14, characterized by a transport device (34) which is connected at the outlet side of the cutting device (32) for the cut-off sections of the coated veneer path.

16. Device according to claim 15, characterized by a stacking device (35) which is connected at the outlet side of the transport device (34) for the supplied sections of the coated veneer path.

17. Device according to at least one of the preceding claims, characterized by a winding-up device (36) which is connected at the outlet side of the guiding device (10) for the coated veneer path.

18. Device according to at least one of the preceding claims, characterized in that the carrier material (11) consists of at least two parallel carrier paths, of which the dimensions - taken transversely to the feed direction - are together less than the width of the veneer path.

19. Process for coating a veneer path which is formed of butt-joined veneer sheets by means of a laminar carrier material (11) comprising the following steps:
   a) the veneer sheets are individually drawn in automatically in a timed manner and are aligned with the front edge thereof at an oscillating stop (7);
   b) the rear end of the first veneer sheet or the partly formed veneer path, respectively, is aligned with respect to the oscillating stop in a manner such that it is controlled by a guide light, wherein the partly formed veneer path at the trailing rear edge thereof is laterally inclined transversely to the feed direction (4) in order to align its rear transverse edge in the longitudinal area thereof, or is inclined to a greater degree than the longitudinal area with the leading rear edge, and wherein furthermore a section which lies behind the point of inclination in the feed direction is fixed;
   c) the next veneer sheet in each case is glued to the rear end of the partly formed veneer path;

d) the carrier material is transported into a press by the partly formed veneer path thereabove and therein the two are glued together, wherein the partly formed coated veneer path (24) is moved forward in a timed manner by one veneer sheet width each time - measured in the feed direction - and subsequently the terminating end of the veneer path is again aligned with respect to the guiding line (9).

## Revendications

1. Dispositif pour revêtir au moins partiellement une bande de contreplaqué constituée par des feuilles de contreplaqué au moyen d'un matériau de support en nappe (11), en particulier en forme de bande, les feuilles de contreplaqué se rencontrant à chaque fois bout à bout, qui présente les caractéristiques suivantes :

a) un dispositif d'alimentation (1) pour les feuilles de contreplaqué et un dispositif de déchargement (28) pour la bande de contreplaqué au moins partiellement formée,

b) une butée oscillante (7) que rencontre le bord avant de la feuille de contreplaqué,

c) un dispositif d'évacuation (30) pour la bande de contreplaqué revêtue au moins partiellement formée,

d) une presse à plateaux (17) pour adapter le matériau de support (11) à la bande de contreplaqué au moins partiellement formée,

e) une ligne d'alignement (9) qui est placée entre la butée oscillante (7) et l'entrée de la presse (17) et qui s'étend transversalement par rapport à la direction d'avancement (4), et deux capteurs espacés qui se trouvent au-dessus de celle-ci et qui sont destinés au bord arrière de la bande de contreplaqué au moins partiellement formée en vue de commander un dispositif d'alignement (10) destiné à cette dernière,

f) le dispositif d'alignement (10) qui est destiné à la bande de contreplaqué au moins partiellement formée et revêtue, qui est disposé derrière la presse (17) dans le direction du passage et qui se compose de trois rouleaux (20, 21, 22) placés l'un derrière l'autre et s'étendant sur toute la largeur de la bande de contreplaqué revêtue au moins partiellement formée, parmi lesquels le rouleau central est réalisé sous la forme d'un rouleau presseur (22) qui peut être avancé par l'intermédiaire d'un dispositif d'avance et dont l'axe peut être déplacé angulairement par rapport à la surface de pressage de la presse à plateaux (17), ainsi que d'un rouleau de serrage (25), lequel coopère avec le rouleau (21) qui est le dernier dans la direction du passage et peut être avancé par l'intermédiaire d'un autre dispositif d'avance, cependant que, pour aligner un coin arrière de la bande de contreplaqué revêtue qui est resté en arrière par rapport à la ligne d'alignement, on fait avancer une extrémité du rouleau presseur (22) qui lui est associé,

g) un rouleau de déviation (14) placé en amont de la presse à plateaux (17) et destiné au matériau de support (11) en forme de bande qui peut être retiré d'un rouleau d'alimentation (12) et à la bande de contreplaqué placée au-dessus de lui et partiellement formée, un rouleau compensateur (15) qui forme une boucle se trouvant entre le rouleau d'alimentation (12) et le rouleau de déviation (14),

h) un poste de collage du contreplaqué (5) pour coller, sur l'extrémité de la bande de contreplaqué qui a été alignée à chaque fois, la feuille de contreplaqué alignée qui est chaque fois la suivante,

i) un chauffage de la presse à plateaux,

k) une commande pas à pas de la presse à plateaux (17), de la butée oscillante (7), du poste de collage (5), du dispositif de déchargement (28), du dispositif d'évacuation (30), du rouleau presseur (22) et du rouleau de serrage (25),

l) un dispositif de régulation comprenant une alimentation en énergie, du moins pour les dispositifs qui peuvent être déplacés pas à pas.

2. Dispositif selon la revendication 1, caractérisé par le fait que le rouleau (20) du dispositif d'alignement (10) qui est en amont dans la direction du passage est associé à la sortie de la presse et réalisé sous la forme d'un rouleau de guidage et de déviation.

3. Dispositif selon la revendication 1 ou 2, caractérisé par le fait que, pour constituer le chauffage de la presse à plateaux, au moins l'un des organes de pressage (18, 19) de la presse à plateaux (17) peut être chauffé.

4. Dispositif selon l'une au moins des revendications précédentes, caractérisé par le fait qu'un autre rouleau de déviation (13) est disposé entre le rouleau compensateur (15) et le rouleau d'alimentation (12) de l'amenée de matériau de support.

5. Dispositif selon l'une au moins des revendications précédentes, caractérisé par le fait que le dispositif d'alimentation (1), ainsi que le dispositif de déchargement (28) destiné à la bande de contreplaqué au moins partiellement formée, comportent chacun des organes transporteurs sans fin dont les brins de travail sont dans le prolongement l'un de l'autre, la butée oscillante (7) se trouvant entre eux.

6. Dispositif selon la revendication 5, caractérisé par le fait que le dispositif d'évacuation (30) destiné à la bande de contreplaqué revêtue au moins partiellement formée comporte un rouleau d'évacuation (29) qui peut être entraîné et avancé vers le rouleau de déviation (14) à l'entrée de la presse.

7. Dispositif selon l'une au moins des revendications précédentes, caractérisé par le fait que le rouleau d'alimentation (12) qui porte le matériau de support (11) peut être entraîné de manière continue.

8. Dispositif selon l'une au moins des revendications précédentes, caractérisé par le fait que le rouleau presseur (22) du dispositif d'alignement (10) qui peut être déplacé transversalement par rapport à son axe longitudinal est réalisé sous la forme d'un deuxième rouleau compensateur.

9. Dispositif selon la revendication 8, caractérisé par le fait que le mouvement de déplacement (23) du rouleau presseur (22) peut être commandé par le dispositif de palpage destiné à la dimension de la feuille de contreplaqué mesurée dans la direction de l'avancement.

10. Dispositif selon l'une au moins des revendications précédentes, caractérisé par le fait que le rouleau de serrage (25) est associé au rouleau arrière (21) du dispositif d'alignement (10), et que ces deux rouleaux peuvent être basculés ensemble vers la gauche ou vers la droite pour réaliser un mouvement d'alignement commandé.

11. Dispositif selon l'une au moins des revendications précédentes, caractérisé par une butée à feuilles (37) qui peut être avancée entre le rouleau d'évacuation (29) et l'entrée de la presse à plateaux (17).

12. Dispositif selon l'une au moins des revendications précédentes, caractérisé par le fait que le rouleau avant (20) à la sortie de la presse et le rouleau presseur (22) du dispositif d'alignement (10) sont réalisés sous la forme de rouleaux refroidisseurs.

13. Dispositif selon l'une au moins des revendications précédentes, caractérisé par le fait que le rouleau arrière (21) du dispositif d'alignement constitue en même temps un élément d'un dispositif de coupe (32) destiné à la bande de contreplaqué revêtue (24), un deuxième élément étant réalisé sous la forme d'un couteau (33) qui peut être avancé.

14. Dispositif selon la revendication 13, caractérisé par le fait que le rouleau arrière (21) est fabriqué en un matériau dur, en particulier en métal, et qu'il est revêtu sur son pourtour de Vulkulan ou d'un matériau similaire mou et élastique ou, respectivement, analogue à du caoutchouc.

15. Dispositif selon la revendication 13 ou 14, caractérisé par un dispositif de transport (34) installé en aval du dispositif de coupe (32) et destiné aux tronçons découpés de la bande de contreplaqué revêtue.

16. Dispositif selon la revendication 15, caractérisé par un dispositif d'empilement (35) installé en aval du dispositif de transport (34) et destiné aux tronçons de la bande de contreplaqué revêtue qui lui sont amenés.

17. Dispositif selon l'une au moins des revendications précédentes, caractérisé par un dispositif d'enroulement (36) installé en aval du dispositif d'alignement (10) et destiné à la bande de contreplaqué revêtue.

18. Dispositif selon l'une au moins des revendications précédentes, caractérisé par le fait que le matériau de support (11) se compose d'au moins deux bandes de support parallèles dont la dimension - mesurée transversalement par rapport à la direction d'avancement - est au total inférieure à la largeur de la bande de contreplaqué.

19. Procédé pour revêtir une bande de contreplaqué formée de feuilles de contreplaqué qui se rencontrent bout à bout au moyen d'un matériau de support (11) en nappe, lequel comprend les étapes de procédé suivantes :

a) les feuilles de contreplaqué sont automatiquement amenées individuellement pas à pas et alignées par leur bord avant sur une butée oscillante (7),

b) l'extrémité arrière de la première feuille de contreplaqué ou de la bande de contre-

plaqué partiellement formée, respective-ment, est alignée par rapport à la butée oscillante en étant commandée par la ligne d'alignement, cependant que la bande de contreplaqué partiellement formée, en vue de l'alignement de son bord transversal arrière, est déviée latéralement dans sa région longitudinale par le coin arrière en retard, transversalement par rapport à la direction de l'avancement (4), ou plus fortement déviée que la région longitudinale comportant le coin arrière en avance, et cependant qu'est en outre immobilisé un tronçon placé derrière l'endroit de la déviation dans la direction de l'avancement,

c) la feuille de contreplaqué qui est à chaque fois la suivante est collée à l'extrémité arrière de la bande de contreplaqué partiellement formée,

d) le matériau de support est transporté dans une presse avec la bande de contreplaqué partiellement formée qui se trouve au-dessus de lui, et ils y sont tous deux collés ensemble, cependant que la bande de contreplaqué revêtue partiellement formée (24) continue à être déplacée pas à pas, à chaque fois d'une largeur de feuille de contreplaqué - mesurée dans la direction de l'avancement - et que l'extrémité sortante de la bande de contreplaqué est à nouveau alignée par rapport à la ligne d'alignement (9).

Fig. 1

EP 0 199 841 B1

EP 0 199 841 B1

Fig.2

15